# EUROPÄISCHE PATENTANMELDUNG

(11) **EP 0 759 627 A2**
(43) Veröffentlichungstag der Anmeldung: **26.02.1997**
(21) Anmeldenummer: 96202018.6
(22) Anmeldetag: 16.07.1996
(51) Int. Cl.: H01G 4/38

(54) **Schaltungsanordnung mit einer Hochspannungskaskadenschaltung**

(30) Priorität: 20.07.1995 DE 19526492
(71) Anmelder: Philips Patentverwaltung GmbH, 22335 Hamburg (DE); Philips Electronics N.V., 5621 BA Eindhoven (NL)
(72) Erfinder: Raets, Hubert, 22335 Hamburg (DE)
(74) Vertreter: Erdmann, Anton, Dipl.-Ing.

(57) **Zusammenfassung**

Die Erfindung betrifft eine Schaltungsanordnung mit einer Hochspannungskaskadenschaltung (1) mit mindestens einer Reihenschaltung (2, 3) von Kondensatoren, welche auf beiden Seiten einer dielektrischen Schicht (18, 18a, 18b) aufgebrachte, gegeneinander versetzte leitfähige Streifen (19, 20, 21, 22, 23, 24, 25) umfassen, wobei die dielektrische Schicht (18, 18a, 18b) mit den leitfähigen Streifen (19, 20, 21, 22, 23, 24, 25) zu einem Wickelkörper (15, 15a, 15b) um einen Träger gewickelt ist. Eine kompakte und kostengünstige Bauweise, insbesondere zur Verwendung der Schaltungsanordnung in einem Hochspannungsgenerator für eine Bildwiedergaberöhre, wird dadurch erreicht, daß der Hochspannungskaskadenschaltung (1) ein Hochspannungs-Ausgangskondensator (6, 12) nachgeschaltet ist und daß der Hochspannungs-Ausgangskondensator (6, 12) der Träger ist.

## Beschreibung

Die Erfindung betrifft eine Schaltungsanordnung mit einer Hochspannungskaskadenschaltung mit mindestens einer Reihenschaltung von Kondensatoren, welche auf beiden Seiten einer dielektrischen Schicht aufgebrachte, gegeneinander versetzte leitfähige Streifen umfassen, wobei die dielektrische Schicht mit den leitfähigen Streifen zu einem Wickelkörper um einen Träger gewickelt ist.

Eine Schaltungsanordnung mit einer Hochspannungskaskadenschaltung ist aus der DE-A 25 33 368 bekannt. Eine Reihenschaltung von Kondensatoren ist hier dadurch gebildet, daß auf beiden Seiten eines Dielektrikums leitfähige Schichten aufgebracht sind, wobei sich die Schichten auf der einen Seite des Dielektrikums partiell mit den Schichten auf der anderen Seite des Dielektrikums überlappen. Das Dielektrikum mit den leitfähigen Schichten ist zu einem Streifenpaket aufgewickelt. Die einzelnen Kondensatoren zweier derartiger Streifenpakete sind mittels Dioden miteinander verbunden, so daß sich eine Hochspannungskaskadenschaltung ergibt. Die Streifenpakete sind dabei um einen Träger gewickelt. Eine derartige Hochspannungskaskadenschaltung ist jedoch sehr voluminös. Beispielsweise in einer Schaltung zur Ansteuerung einer Bildwiedergaberöhre macht die Hochspannungskaskadenschaltung einen Großteil des Volumens aus.

Der Erfindung liegt die Aufgabe zugrunde, eine Schaltungsanordnung für einen Hochspannungsgenerator zu schaffen, der bei geringen Abmessungen, geringen Kosten und hohem Wirkungsgrad eine stabile Hochspannung liefert.

Diese Aufgabe wird erfindungsgemäß dadurch gelöst, daß der Hochspannungskaskadenschaltung ein Hochspannungs-Ausgangskondensator nachgeschaltet ist und daß der Hochspannungs-Ausgangskondensator der Träger ist.

Durch die erfindungsgemäße Lösung der Aufgabe gelingt es, daß sowohl die beiden Reihenschaltungen von Kondensatoren der Hochspannungskaskadenschaltung als auch der Hochspannungs-Ausgangskondensator in einem Bauelement integriert sind, wodurch der Platzbedarf deutlich reduziert wird. Der Hochspannungs-Ausgangskondensator ist in der herkömmlichen Ausführungsform als einzelnes Bauelement neben der Hochspannungskaskadenschaltung angeordnet und macht einen Großteil des Volumens aus. Dadurch, daß der Hochspannungs-Ausgangskondensator der Träger ist und somit innen in dem Wickelkörper angeordnet ist, liegt die am Hochspannungs-Ausgangskondensator anliegende hohe Spannung innen in dem Wickelkörper an, und es können deshalb nur geringe Streueffekte auftreten.

Der Hochspannungs-Ausgangskondensator ist Teil einer Teilerschaltung zur frequenzunabhängigen Spannungsteilung der Ausgangsspannung der Hochspannungskaskadenschaltung.

In einer erfindungsgemäßen Ausgestaltung ist vorgesehen, daß der Hochspannungs-Ausgangskondensator mit einer Isolierfolie und über der Isolierfolie mit einer leitfähigen Abschirmfolie umwickelt ist. Die mit Masse verbundene Abschirmfolie dient dem Zweck, eine vorhandene Koppelkapazität zwischen dem Eingang der Hochspannungskaskadenschaltung und dem Hochspannungs-Ausgangskondensator zu verringern.

Um das Streufeld der Hochspannungskaskadenschaltung möglichst gering zu halten und dadurch Einstreuungseffekte auf in der Umgebung der Hochspannungskaskadenschaltung befindliche Bauelemente möglichst zu vermeiden, ist vorteilhaft in Weiterbildung der Erfindung vorgesehen, daß der dem Ausgang der Hochspannungskaskadenschaltung nächstliegende Kondensator der Reihenschaltung durch die innersten Wicklungen des Wickelkörpers gebildet ist. Dadurch wird erreicht, daß die am Ausgang der Hochspannungskaskadenschaltung anliegenden hohen Potentiale an der Innenseite des Wickelkörpers anliegen. Dadurch ergibt sich dann automatisch, daß die am Eingang der Hochspannungskaskadenschaltung liegenden Kondensatoren der Hochspannungskaskadenschaltung außen an dem Wickelkörper angeordnet sind, so daß die niedrigen Potentiale an der Außenseite des Wickelkörpers anliegen, was auch zu einer Verringerung der Streueffekte beiträgt.

Eine besonders vorteilhafte Lösung der Aufgabe gelingt erfindungsgemäß durch eine Schaltungsanordnung mit zwei Reihenschaltungen von Kondensatoren, die dadurch gekennzeichnet ist, daß die die beiden Reihenschaltungen von Kondensatoren bildenden leitfähigen Streifen in Wickelrichtung parallel zueinander verlaufend auf einer gemeinsamen dielektrischen Schicht aufgebracht sind. Dadurch ergibt sich eine besonders kompakte Bauweise. Die Herstellung beider Reihenschaltungen kann in einem Arbeitsgang erfolgen, indem die leitfähigen Streifen parallel auf die dielektrische Schicht aufgebracht werden. Darüber wird danach eine isolierende Schicht gelegt, und schließlich wird das gesamte Schichtpaket aufgewickelt.

Die gestellte Aufgabe wird auch gelöst durch eine Schaltungsanordnung mit einer Hochspannungskaskadenschaltung mit mindestens einer Reihenschaltung von Kondensatoren, welche auf beiden Seiten einer dielektrischen Schicht aufgebrachte, gegeneinander versetzte leitfähige Streifen umfassen, wobei die dielektrische Schicht mit den leitfähigen Streifen zu einem Wickelkörper gewickelt ist, die dadurch gekennzeichnet ist, daß der Hochspannungskaskadenschaltung ein Hochspannungs-Ausgangskondensator nachgeschaltet ist und daß der Hochspannungs-Ausgangskondensator außerhalb des Wickelkörpers auf der Zentralachse des Wickelkörpers angeordnet ist. Dies ergibt zwar eine längere, aber besonders schmale Anordnung, wodurch die Schaltungsanordnung für Bildröhren geeignet ist, da dabei häufig sehr wenig Platz auf der Platine, jedoch viel Platz nach oben hin ist.

Weiterhin wird die gestellte Aufgabe gelöst durch einen Gleichspannungskonverter mit einer Schaltungsanordnung nach Anspruch 1, welche zwei mittels Dioden gekoppelte Reihenschaltungen von Kondensatoren einer Hochspannungskaskadenschaltung und einen der Hochspannungskaskadenschaltung nachgeschalteten Hochspannungs-Ausgangskondensator aufweist, der dadurch gekennzeichnet ist, daß der Hochspannungs-Ausgangskondensator der Träger für die die beiden Reihenschaltungen von Kondensatoren bildenden Wickelkörper ist und daß der Hochspannungskaskadenschaltung eine Einheit zur Erzeugung einer Wechselspannung aus einer Eingangsgleichspannung vorgeschaltet ist.

Die beiden Reihenschaltungen von Kondensatoren der Hochspannungskaskadenschaltung können auch durch leitfähige Streifen auf zwei getrennten dielektrischen Schichten gebildet sein, die auch getrennt um den Hochspannungs-Ausgangskondensator als zwei Wickelkörper gewickelt sind. Dies hat den Vorteil, daß die kapazitive Kopplung zwischen den Kondensatoren der beiden Reihenschaltungen - variiert werden kann dadurch, daß der Abstand zwischen den beiden Wickelkörpern variiert wird. Je größer dieser Abstand gewählt ist, desto geringer ist die Kopplung.

Mit der erfindungsgemäßen Anordnung ist es möglich, Hochspannungsgeneratoren mit geringen Abmessungen, geringem Gewicht, guten elektrischen und mechanischen Eigenschaften, hoher Zuverlässigkeit und geringen Kosten zu realisieren. Infolge dieser Eigenschaften eignet sich die erfindungsgemäße Anordnung, wie nach einer weiteren Ausgestaltung der Erfindung vorgesehen ist, zur Verwendung in einem Hochspannungsgenerator für eine Röhre, insbesondere für eine Bildwiedergaberöhre oder eine Röntgenröhre.

Die Erfindung wird nachfolgend anhand der Zeichnung näher erläutert.

Es zeigen:
Fig. 1 ein Schaltbild einer Hochspannungskaskadenschaltung mit einer nachgeschalteten Teilerschaltung für einen Gleichspannungskonverter,
Fig. 2 eine erfindungsgemäße Schaltungsanordnung, bestehend aus Kondensatoren der Hochspannungskaskadenschaltung und dem Hochspannungs-Ausgangskondensator,
Fig. 3 eine Detaildarstellung zur Verdeutlichung der Schichtabfolge einer Anordnung gemäß Fig. 2,
Fig. 4 eine alternative Ausführungsform einer erfindungsgemäßen Schaltungsanordnung,
Fig. 5 eine weitere Ausführungsform einer erfindungsgemäßen Schaltungsanordnung und
Fig. 6 ein Blockschaltbild zur Erläuterung eines Gleichspannungskonverters für eine Bildröhre.

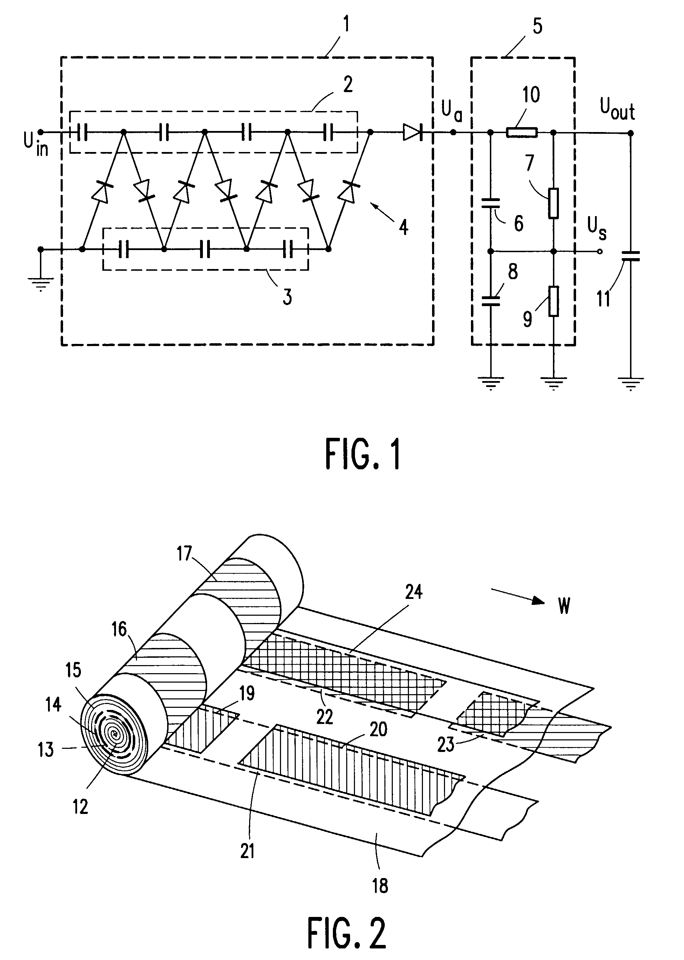

In Fig. 1 ist mit 1 eine Hochspannungskaskadenschaltung bezeichnet. Diese Hochspannungskaskadenschaltung 1 ist gebildet durch eine erste Reihenschaltung 2 von Kondensatoren und eine zweite Reihenschaltung 3 von Kondensatoren, die mittels Dioden 4 miteinander gekoppelt sind. Der schaltungstechnische Aufbau einer derartigen Hochspannungskaskadenschaltung 1 ist an sich bekannt und soll deshalb hier nicht weiter erläutert werden. Die Hochspannungskaskadenschaltung 1 stellt eine Vervielfacherschaltung dar, mit der die an ihrem Eingang anliegende Wechselspannung Uᵢₙ gleichgerichtet und vervielfacht wird, so daß am Ausgang der Hochspannungskaskadenschaltung 1 eine Gleichspannung Uₐ mit hohem Spannungswert anliegt.

Der Hochspannungskaskadenschaltung 1 nachgeschaltet ist eine Teilerschaltung 5. Diese Teilerschaltung 5 ist gebildet durch einen Hochspannungs-Ausgangskondensator 6 und einen Hochspannungs-Teilerwiderstand 7 und durch eine am gemeinsamen Knotenpunkt dieser beiden Elemente gegen Masse liegende Parallelschaltung aus einem Niedervolt-Kondensator 8 und einem Niedervolt-Teilerwiderstand 9. Am Ausgang der Hochspannungskaskadenschaltung 1 liegt weiterhin zwischen den Anschlüssen des Hochspannungs-Ausgangskondensators 6 und des Hochspannungs-Teilerwiderstands 7 ein Serienwiderstand 10. An dem Knotenpunkt zwischen diesem Serienwiderstand 10 und dem Hochspannungs-Ausgangswiderstand 7 wird die Ausgangs-Gleichspannung Uₒᵤₜ abgegriffen. An diesem Knotenpunkt liegt auch die Last, beispielsweise einer Bildröhre an, deren kapazitiver Anteil 11, beispielsweise die Bildröhrenkapazität, dargestellt ist.

Die Aufgabe der Teilerschaltung 5 ist einerseits, eine frequenzunabhängige Teilung der Ausgangsspannung Uₐ der Hochspannungskaskadenschaltung 1 vorzunehmen. Eine frequenzunabhängige Teilung wird dann erhalten, wenn der Wert der Kapazität 6 multipliziert mit dem Wert des Widerstandes 7 gleich ist dem Wert der Kapazität 8 multipliziert mit dem Wert des Widerstandes 9. An dem gemeinsamen Knotenpunkt der Elemente 6 bis 9 wird eine Steuerspannung Uₛ erhalten, die eine Niedervoltabbildung der Spannung Uₐ darstellt und zur Steuerung der Schaltfrequenz (nicht dargestellter) Schalter am Eingang eines Gleichspannungskonverters verwendet wird.

Andererseits bildet der Serienwiderstand 10 zusammen mit dem kapazitiven Teil der Ausgangslast 11 einen Tiefpaß, der eine in der Ausgangsspannung Uₐ vorhandene Welligkeit reduziert.

In Fig. 2 ist eine erfindungsgemäße Schaltungsanordnung, bestehend aus Kondensatoren der Hochspannungskaskadenschaltung 1 und dem Hochspannungs-Ausgangskondensator 6, gezeigt. Mit 12 ist die Wicklung des Hochspannungs-Ausgangskondensators, der in bekannter Weise als gewickelter Kondensator ausgeführt ist, bezeichnet. Um diesen Hochspannungs-Ausgangskondensator 12 ist eine Isolierfolie 13 und darüber ein leitfähiger Film 14, beispielsweise ein Aluminium-Film, zur Abschirmung gewickelt. Um diese als Träger fungierende Anordnung sind die zu einem Wickelkörper 15 gewickelten Wicklungen, die die Kondensatoren der Hochspannungskaskadenschaltung 1 bilden, spiralförmig gewickelt.

Auf einer dielektrischen Schicht 18 ist eine Anzahl von parallel zueinander verlaufenden leitfähigen Streifen, beispielsweise Aluminium-Streifen, beidseitig in Streifenbereichen 16,17 aufgebracht. Auf einem abgewickelten Teilstück des Wickelkörpers 15 ist die Anordnung dieser leitfähigen Streifen der Streifenbereiche 16, 17 erkennbar. Im unteren Bereich der Fig. 2 sind zwei von oben auf die dielektrische Schicht 18 aufgebrachte Streifen 19 und 20 gezeigt, sowie ein von unten auf die dielektrische Schicht 18 aufgebrachter Streifen 21. Ein erster Kondensator ist gebildet in dem Bereich, in dem sich die zwei Streifen 20 und 21 überlappen, ein zweiter Kondensator ist dort gebildet, wo sich die Streifen 19 und 21 überlappen. Zwischen den Streifen 19 und 20 ist ein Bereich, in dem auf die dielektrische Schicht 18 von oben kein leitfähiges Material aufgebracht ist. Diese freien Bereiche dienen dazu, den Bereich zu definieren, in dem zwischen den von oben und von unten auf die dielektrische Schicht 18 aufgebrachten leitfähigen Streifen eine kapazitive Wechselwirkung erzielt wird. Die Anzahl derartiger freier Bereiche in dem Streifenbereich 16 bestimmt die Anzahl der Kondensatoren einer Reihenschaltung. Die Anzahl der Kondensatoren ist um eins größer als die Anzahl der freien Bereiche.

Wie im oberen Teil der Fig. 2 gezeigt ist, befinden sich diese freien Bereiche auch auf der Unterseite der dielektrischen Schicht 18. Erkennbar sind dort von dem Streifenbereich 17 zwei von unten auf die dielektrische Schicht 18 aufgebrachte Streifen 22 und 23 sowie ein von oben aufgebrachter Streifen 24.

Alle Kondensatoren der Reihenschaltung 2 (siehe Fig. 1) werden durch überlappende Streifen des Streifenbereichs 17 gebildet, alle Kondensatoren der Reihenschaltung 3 durch überlappende Streifen des Streifenbereichs 16.

Nicht dargestellt in Fig. 2 ist eine Isolierfolie, die vor dem Aufwickeln des Wickelkörpers 15 auf die mit leitfähigen Streifen beschichtete dielektrische Folie 18 gelegt und danach mitaufgewickelt wird.

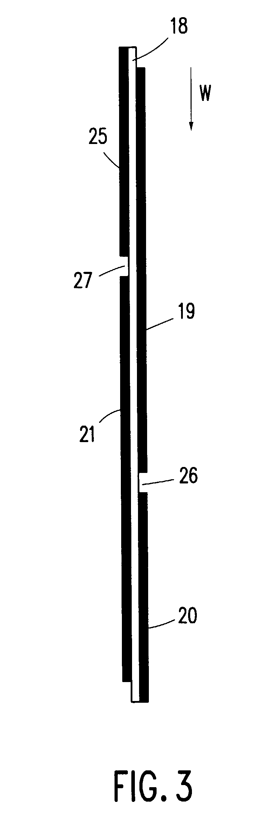

In Fig. 3 ist zur Verdeutlichung der Schichtabfolge ein Schnitt durch den abgewickelten Teil der in Fig. 2 dargestellten Schaltungsanordnung gezeigt. Zu erkennen ist die dielektrische Schicht 18, auf die beidseitig in Wickelrichtung W zueinander versetzt leitfähige Streifen 19, 20, 21 und 25 aufgebracht sind. Abwechselnd auf der Ober- und der Unterseite der dielektrischen Schicht 18 befinden sich zwischen den leitfähigen Streifen freie Bereiche 26, 27.

Ein erster Kondensator ergibt sich im Überlappungsbereich zwischen den Streifen 19 und 25, ein zweiter Kondensator im Überlappungsbereich zwischen den Streifen 19 und 21 und ein dritter Kondensator im Überlappungsbereich zwischen den Streifen 20 und 21. Eine Verbindung des ersten mit dem zweiten Kondensator ergibt sich dadurch, daß der Streifen 19 gegenüber dem freien Bereich 27 durchgehend verbunden ist, also keinen freien Bereich aufweist. In gleicher Weise ergibt sich eine Verbindung zwischen dem zweiten und dritten Kondensator dadurch, daß der Streifen 21 gegenüber dem freien Bereich 26 durchgehend verbunden ist. Dadurch, daß sich die freien Bereiche wechselseitig auf der Ober- und Unterseite der dielektrischen Schicht 18 befinden, wird die Reihenschaltung der Kondensatoren erreicht.

Bei der in Fig. 2 dargestellten Ausführungsform sind die freien Bereiche im Streifenbereich 16 in Wickelrichtung W versetzt zu den freien Bereichen im Streifenbereich 17 angeordnet. Dies ist jedoch nicht notwendigerweise erforderlich. Die freien Bereiche könnten auch nebeneinander liegen.

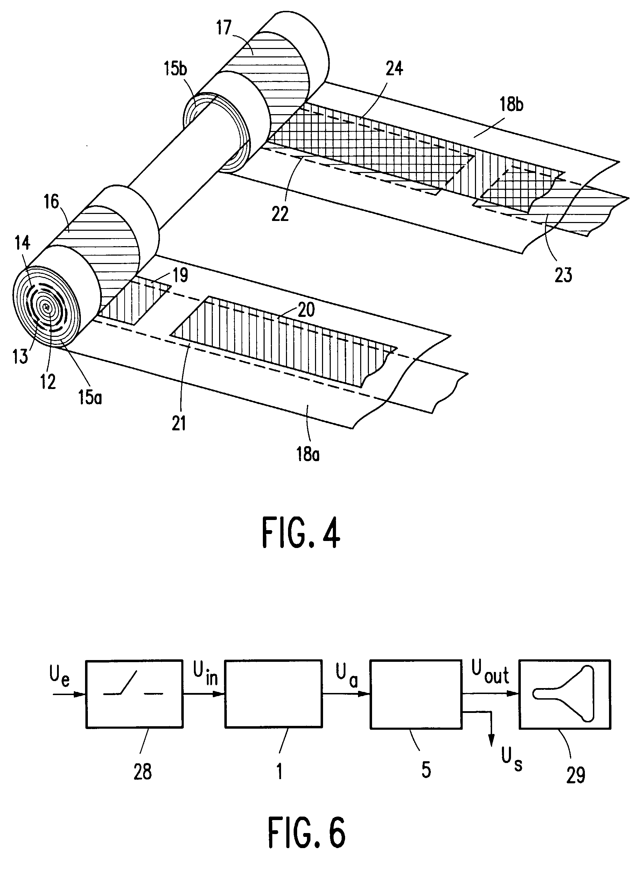

Bei der in Fig. 4 dargestellten alternativen Ausführungsform einer erfindungsgemäßen Schaltungsanordnung bilden die Wicklungen, welche die zwei Reihenschaltungen von Kondensatoren bilden, zwei voneinander getrennte Wickelkörper 15a, 15b. Alle leitfähigen Streifen des Streifenbereichs 16 sind auf einer ersten dielektrischen Schicht 18a aufgebracht, alle Streifen des Streifenbereichs 17 auf einer zweiten dielektrischen Schicht 18b. Der Hochspannungs-Ausgangskondensator ist als ein Wickelkondensator 12 ausgeführt und mit einer Isolierfolie 13 und einer Abschirmfolie 14 umwickelt. An je einem Ende dieser Träger-Anordnung sind die Wickelkörper 15a und 15b angeordnet. Diese räumliche Trennung und gleichzeitige Abstandsvergrößerung der Wickelkörper 15a und 15b bewirkt, daß die kapazitive Kopplung zwischen den Kondensatoren der ersten Reihenschaltung, also des Wickelkörpers 15a, und den Kondensatoren der zweiten Reihenschaltung, also des Wickelkörpers 15b, verringert ist, verglichen mit der kapazitiven Kopplung bei der Anordnung nach Fig. 2. Durch Variation des Abstandes der Wickelkörper 15a und 15b voneinander kann der Kopplungsgrad variiert werden.

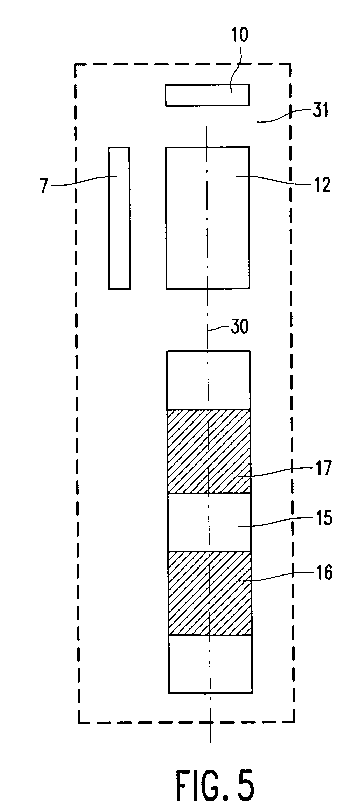

In Fig. 5 ist schematisch eine weitere Ausführungsform einer erfindungsgemäßen Schaltungsanordnung gezeigt. Dargestellt ist der Wickelkörper 15 mit den Streifenbereichen 16 und 17, die die beiden Reihenschaltungen 2,3 bilden. Außerhalb des Wickelkörpers 15 senkrecht darüber ist der Hochspannungs-Ausgangskondensator 12 derart angeordnet, daß er symmetrisch zur Zentralachse 30 des Wickelkörpers 15 liegt. Außerdem ist die Lage des Hochspannungs-Teilerwiderstandes 7 und des Serienwiderstandes 10 neben bzw. über dem Hochspannungs-Ausgangskondendator 12 erkennbar. Alle genannten Elemente sind zu einem Bauteil 31 miteinander vergossen, das senkrecht in der in Fig. 5 gezeigten Lage auf einer Platine montiert werden kann. Dadurch wird nur wenig Platz auf der Platine beansprucht, der größere Platzbedarf in der Höhe spielt bei Monitoren keine Rolle, da hierfür ausreichend Platz vorhanden ist. Dadurch, daß der Hochspannungs-Ausgangskondensator 12 oben in dem Bauteil 31 angeordnet ist, ist auch dessen Streufeld von anderen auf der Platine befindlichen Komponenten weiter entfernt. Außerdem ergibt sich bei dieser Anordnung eine gute kapazitive Entkopplung zwischen dem Eingang der Hochspannungskaskadenschaltung 1 und dem Hochspannungs-Ausgangskondensator 12.

In Fig. 6 ist ein Blockschaltbild zur Erläuterung eines Gleichspannungskonverters für eine Bildröhre dargestellt. Mit 28 ist eine Einheit zur Bildung der Wechselspannung Uᵢₙ aus einer eingangs anliegenden Gleichspannung Uₑ bezeichnet. Mit 1 ist die Hochspannungskaskadenschaltung dargestellt, die die Wechselspannung Uᵢₙ in die Ausgangsgleichspannung Uₐ mit hohem Spannungswert transformiert. Die Teilerschaltung 5 erzeugt eine Steuerspannung Uₛ als Niedervoltabbildung der Spannung Uₐ. An einer ausgangsseitig angeschlossenen Bildröhre 29 liegt die stabile Gleichspannung Uₒᵤₜ mit hohem Spannungswert an.

Die Verdrahtung der beiden Reihenschaltungen von Kondensatoren erfolgt in der Weise, daß an die die Kondensatoren bildenden Streifenbereiche aus der Schaltungsanordnung herausführende Anschlußdrähte angeschlossen werden. Vorteilhafterweise werden die Reihenschaltungen derart verdrahtet, daß die am Eingang der Hochspannungskaskadenschaltung liegenden Kondensatoren sich außen an der Schaltungsanordnung befinden und daß die am Ausgang der Hochspannungskaskadenschaltung liegenden Kondensatoren innen direkt über der Abschirmfolie liegen.

Für die Erfindung spielt es keine Rolle. wie groß die Anzahl der Kondensatoren in der Hochspannungskaskadenschaltung ist und wie die Kopplung durch die Dioden erfolgt.

Der Serienwiderstand 10 kann in einer alternativen Schaltungsanordnung statt an der in Fig. 1 gezeigten Stelle direkt an dem Ausgang der Schaltung zwischen dem Hochspannungs-Teilerwiderstand 7 und der Lastkapazität 11 angeordnet sein. Hierdurch wird jedoch eine geringere Oberwellendämpfung erreicht als bei der in Fig. 1 gezeigten Anordnung.

Die Herstellung der in Fig. 2 gezeigten Schaltungsanordnung erfolgt derart, daß um den als Wickelkondensator ausgeführten Hochspannungs-Ausgangskondensator eine Isolierfolie gewickelt wird und daß um die Isolierfolie eine leitfähige Schicht zur Abschirmung gewickelt wird. Darüber wird danach die dielektrische Schicht mit den leitfähigen Streifen zu der Schaltungsanordnung gewickelt.

Die Herstellung der Schaltungsanordnung kann auch derart erfolgen, daß der Wickelkörper 15 (siehe Fig. 2) bzw. die Wickelkörper 15a, 15b (siehe Fig. 4) in einem separaten Arbeitsgang gefertigt und danach über den mit Isolierfolie 13 und Abschirmfolie 14 umwickelten Hochspannungs-Ausgangskondensator 12 geschoben werden.

Die Hochspannungskaskadenschaltung, die Teilerschaltung ausschließlich des Niedervoltkondensators und die Dioden sind vorteilhaft als Bauteil miteinander vergossen. Anstatt wie bisher zwei Teile, nämlich die Hochspannungskaskadenschaltung und die Teilerschaltung, muß jetzt nur noch diese kompakte Kombination als ein Teil vergossen werden.

## Patentansprüche

1. Schaltungsanordnung mit einer Hochspannungskaskadenschaltung (1) mit mindestens einer Reihenschaltung (2,3) von Kondensatoren, welche auf beiden Seiten einer dielektrischen Schicht (18,18a,18b) aufgebrachte, gegeneinander versetzte leitfähige Streifen (19,20,21,22,23,24,25) umfassen, wobei die dielektrische Schicht (18,18a,18b) mit den leitfähigen Streifen (19,20,21,22,23,24,25) zu einem Wickelkörper (15,15a,15b) um einen Träger gewickelt ist,
dadurch gekennzeichnet, daß der Hochspannungskaskadenschaltung (1) ein Hochspannungs-Ausgangskondensator (6,12) nachgeschaltet ist und daß der Hochspannungs-Ausgangskondensator (6,12) der Träger ist.

2. Schaltungsanordnung nach Anspruch 1,
dadurch gekennzeichnet, daß der Hochspannungs-Ausgangskondensator (6, 12) mit einer Isolierfolie (13) und über der Isolierfolie (13) mit einer leitfähigen Abschirmfolie (14) umwickelt ist.

3. Schaltungsanordnung nach einem der Ansprüche 1 oder 2,
dadurch gekennzeichnet, daß der dem Ausgang der
Hochspannungskaskadenschaltung (1) nächstliegende Kondensator der Reihenschaltung (2, 3) durch die innersten Wicklungen des Wickelkörpers (15, 15a, 15b) gebildet ist.

4. Schaltungsanordnung mit zwei Reihenschaltungen (2, 3) von Kondensatoren, insbesondere nach einem der Ansprüche 1 bis 3,
dadurch gekennzeichnet, daß die die beiden Reihenschaltungen (2, 3) von Kondensatoren bildenden leitfähigen Streifen (19, 20, 21, 22, 23, 24, 25) in Wickelrichtung parallel zueinander verlaufend auf einer gemeinsamen dielektrischen Schicht (18) aufgebracht sind.

5. Schaltungsanordnung mit einer Hochspannungskaskadenschaltung (1) mit mindestens einer Reihenschaltung (2, 3) von Kondensatoren, welche auf beiden Seiten einer dielektrischen Schicht (18, 18a, 18b) aufgebrachte, gegeneinander versetzte leitfähige Streifen (19, 20, 21, 22, 23, 24, 25) umfassen, wobei die dielektrische Schicht (18, 18a, 18b) mit den leitfähigen Streifen (19, 20, 21, 22, 23, 24, 25) zu einem Wickelkörper (15, 15a, 15b) gewickelt ist,
dadurch gekennzeichnet, daß der Hochspannungskaskadenschaltung (1) ein Hochspannungs-Ausgangskondensator (6, 12) nachgeschaltet ist und daß der Hochspannungs-Ausgangskondensator (6, 12) außerhalb des Wickelkörpers (15, 15a, 15b) auf der Zentralachse (30) des Wickelkörpers (15, 15a, 15b) angeordnet ist.

6. Gleichspannungskonverter mit einer Schaltungsanordnung nach Anspruch 1, welche zwei mittels Dioden (4) gekoppelte Reihenschaltungen (2, 3) von Kondensatoren einer Hochspannungskaskadenschaltung (1) und einen der Hochspannungskaskadenschaltung (1) nachgeschalteten Hochspannungs-Ausgangskondensator (6, 12) aufweist,
dadurch gekennzeichnet, daß der HochspannungsAusgangskondensator (6, 12) der Träger für die die beiden Reihenschaltungen (2, 3) von Kondensatoren bildenden Wickelkörper (15, 15a, 15b) ist und daß der Hochspannungskaskadenschaltung (1) eine Einheit (28) zur Erzeugung einer Wechselspannung aus der Eingangsgleichspannung vorgeschaltet ist.

7. Verwendung der Schaltungsanordnung nach Anspruch 1 oder 5 in einem Hochspannungsgenerator für eine Röhre (29), insbesondere für eine Bildwiedergaberöhre oder eine Röntgenröhre.
